# EUROPEAN PATENT APPLICATION

(11) **EP 4 517 121 A1**
(43) Date of publication of application: **05.03.2025**
(21) Application number: 24196070.7
(22) Date of filing: 23.08.2024
(51) Int. Cl.: F16C 19/54, H02K 1/32, F16C 33/66, H02K 5/173, H02K 7/00, H02K 5/124, H02K 7/116, H02K 9/19

(54) **COAXIAL ELECTRIC DRIVE DEVICE**

(30) Priority: 29.08.2023 CN 202311102922
(71) Applicant: ZF Friedrichshafen AG, 88046 Friedrichshafen (DE)
(72) Inventor: Sun, Jiabin, Shanghai 201615 (CN); Fei, Ningzhong, Shanghai 201615 (CN)
(74) Representative: ZF Friedrichshafen AG

(57) **Abstract**

The present invention relates to the technical field of electric drive devices, and provides a coaxial electric drive device including: a hollow motor shaft and a speed reducer drivingly connected to the motor shaft, two ends of the motor shaft being rotatably supported by a pair of bearings, and an output shaft of the speed reducer being coaxially arranged with clearance within the motor shaft, wherein a flow channel for communicating the outside with an annular clearance between the output shaft and the motor shaft is provided in the output shaft; a pair of seals are provided in the annular clearance at positions corresponding to the bearings, and a pair of through holes directed to the bearings are provided at portions of the motor shaft close to seals. According to the present invention, the pair of seals avoid leakage of a lubricating and cooling medium to ensure the lubricating and cooling effect. The lubricating and cooling medium enters the annular clearance from the flow channel provided in the output shaft to lubricate and cool the motor shaft, and can flow to the pair of bearings through the through holes of the motor shaft to lubricate and cool the bearings. In this way, effective lubrication and cooling of the coaxial electric drive device are achieved.

## Description

### Technical Field

The present invention relates to the technical field of electric drive devices, and in particular to a coaxial electric drive device.

### Background Art

In order to save the arrangement space, electric drive devices usually adopts a solution of coaxial arrangement. An electric drive device in a coaxial arrangement mainly includes a motor, a hollow motor shaft fixedly inserted into a motor rotor, a speed reducer connected to the motor shaft to receive power from the motor shaft, and an output shaft connected to the speed reducer to output power. The output shaft is accommodated with clearance within the motor shaft and is coaxially arranged with the motor shaft.

The electric drive device needs to be lubricated and cooled, to ensure smooth operation of the motor and to carry away heat generated in the operation of the motor. At present, for the electric drive device in a coaxial arrangement, a medium typically flows into one side of an annular clearance between the output shaft and the motor shaft and flows out of the other side of the annular clearance to lubricate and cool the motor.

However, there is a problem of leakage of the medium from the annular clearance, and the medium often flows out of the annular clearance before sufficiently lubricating and cooling the motor.

It should be noted that information disclosed in the above background art section is only used to enhance the understanding of the background of the present invention, and therefore may include information that does not constitute the prior art known to those of ordinary skill in the art.

### Summary of the Invention

In view of this, the present invention provides a coaxial electric drive device, in which a pair of seals provided at two ends of an annular clearance avoid leakage of a lubricating and cooling medium to ensure the lubricating and cooling effect. The lubricating and cooling medium enters the annular clearance from the flow channel provided in the output shaft to lubricate and cool the motor shaft, and can flow to the pair of bearings through the through holes of the motor shaft to lubricate and cool the bearings. In this way, effective lubrication and cooling of the coaxial electric drive device are achieved.

According to an aspect of the present invention, provided is a coaxial electric drive device, including a hollow motor shaft and a speed reducer drivingly connected to the motor shaft, two ends of the motor shaft being rotatably supported by a pair of bearings, and an output shaft of the speed reducer being coaxially arranged with clearance within the motor shaft, wherein a flow channel for communicating the outside with an annular clearance between the output shaft and the motor shaft is provided in the output shaft; and a pair of seals are provided in the annular clearance at positions corresponding to the bearings, and a pair of through holes directed to the bearings are provided at portions of the motor shaft close to the seals.

In some embodiments, the seals are fixedly connected to the motor shaft; when a rotation speed of the motor shaft is not greater than a critical rotation speed, the seals are in a slight interference fit with the output shaft; and when the rotation speed of the motor shaft is greater than the critical rotation speed, the seals are in a clearance fit with the output shaft.

In some embodiments, the critical rotation speed ranges from 15000 rpm to 20000 rpm.

In some embodiments, a range of magnitude of interference of the slight interference fit is determined according to the critical rotation speed.

In some embodiments, a pair of rolling bearings with a seal ring are provided in the annular clearance at positions corresponding to the bearings, the seal rings form the seals, and the seal rings are disposed close to the through holes.

In some embodiments, the seals are any one of sliding bearings, oil seals, rectangular rings and O-rings.

In some embodiments, a main body of the flow channel extends axially and has an opening provided in an end face or a circumferential wall of the output shaft, and a portion of the flow channel that leads to the annular clearance extends radially.

In some embodiments, the through holes each extend obliquely at a preset angle with respect to a radial direction.

In some embodiments, a radial hole, which leads to a motor rotor fixedly connected to the motor shaft, is provided in a portion of the motor shaft that is located between the pair of through holes.

In some embodiments, the motor shaft has a non-circular cross section, and an outer wall of the motor shaft includes an arc-shaped portion in an interference fit with the motor rotor, and a non-arc-shaped portion forming a clearance with the motor rotor.

In some embodiments, the flow channel allows for the inflow of a lubricating and cooling medium, and the lubricating and cooling medium is an oil medium or a water medium.

Compared with the prior art, the present invention has at least the following beneficial effects.

In the coaxial electric drive device of the present invention, the pair of seals provided at two ends of the annular clearance avoids leakage of the lubricating and cooling medium to ensure the lubricating and cooling effect. The lubricating and cooling medium enters the annular clearance from the flow channel provided in the output shaft to lubricate and cool the motor shaft, and can flow to the pair of bearings through the through holes of the motor shaft that are provided corresponding to the bearings and directed to the bearings, to lubricate and cool the bearings. In this way, effective lubrication and cooling of the coaxial electric drive device are achieved.

It should be understood that the above general description and the following detailed description are only exemplary and explanatory, and cannot limit the present invention.

### Brief Description of the Drawings

The accompanying drawings herein, which are incorporated into and constitute a part of the description, illustrate embodiments consistent with the present invention and, together with the description, are used to explain principles of the present invention. Obviously, the accompanying drawings described below show merely some of the embodiments of the present invention, and those of ordinary skill in the art would also have obtained other accompanying drawings according to these accompanying drawings without any creative effort.
FIG. 1 shows a schematic structural diagram of a coaxial electric drive device in an embodiment of the present invention;
FIG. 2 shows an enlarged schematic structural diagram of bearings and seals in the coaxial electric drive device according to the embodiment of the present invention; and
FIG. 3 shows a schematic structural diagram of an open type drawn cup needle roller bearing without an inner ring and having a seal ring on one side.

### Detailed Description of Embodiments

Now exemplary implementations will be described more fully with reference to the accompanying drawings. However, the exemplary implementations can be implemented in many forms and should not be construed as being limited to the implementations set forth herein. On the contrary, these implementations are provided to make the present invention thorough and complete, and to fully convey the concept of the exemplary implementations to those skilled in the art.

The accompanying drawings are only schematic illustrations of the present invention, and are not necessarily drawn to scale. In the accompanying drawings, the same reference numerals denote the same or similar parts, and thus the repeated description thereof will be omitted. In the description of the present invention, orientations or positional relationships indicated by the terms such as "axial" and "radial" are based on orientations or positional relationships shown in the drawings, which is only for convenience of describing the present invention and simplifying the description, rather than indicating or implying that a device or an element referred to must have a specific orientation or be constructed and operated in a specific orientation, and therefore cannot be construed as limiting the present invention.

It should be noted that the embodiments in the present invention and features of the various embodiments can be combined with each other without conflict.

A coaxial electric drive device is configured for use in an electric vehicle, and includes a motor and a speed reducer. The motor has a hollow motor shaft. The motor shaft is fixedly inserted into a motor rotor and is driven to rotate by the motor rotor. Two ends of the motor shaft are rotatably supported by a pair of bearings. The speed reducer is drivingly connected to the motor shaft. The motor shaft transmits power to the speed reducer. The speed reducer has two output shafts that transmit power to left and right wheels of the electric vehicle respectively to drive the electric vehicle. One of the output shafts of the speed reducer is coaxially arranged with clearance within the motor shaft. The output shaft described hereinafter is the output shaft coaxially arranged with clearance within the motor shaft.

In the coaxial electric drive device illustrated in the accompanying drawings of the present invention, a body of the motor and a body of the speed reducer are hidden. Instead, the motor shaft, the output shaft, and other structural designs related to cooling and lubrication are mainly illustrated. However, this should not be considered as a limitation on the coaxial electric drive device of the present invention.

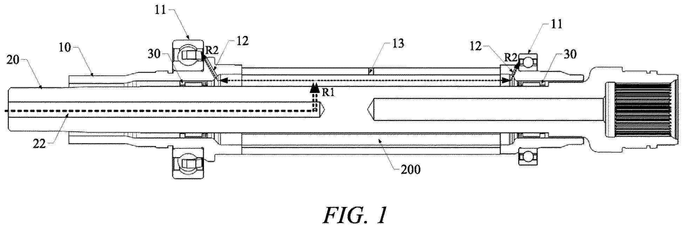

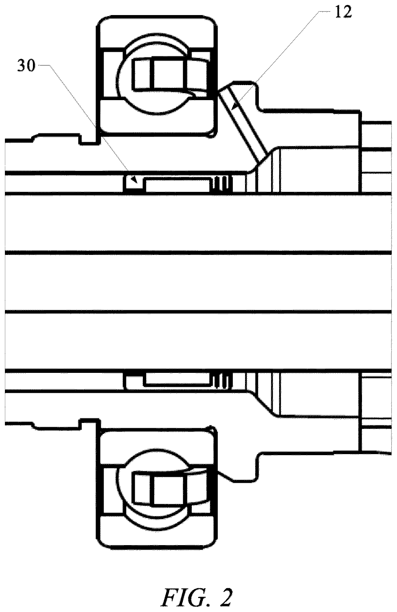

FIG. 1 shows a structure of a coaxial electric drive device in an embodiment of the present invention, and FIG. 2 shows an enlarged structure of bearings and seals in the coaxial electric drive device. With reference to FIGS. 1 and 2, the coaxial electric drive device provided in this embodiment of the present invention includes:
a hollow motor shaft 10 and a speed reducer drivingly connected to the motor shaft 10. Two ends of the motor shaft 10 are rotatably supported by a pair of bearings 11, and an output shaft 20 of the speed reducer is coaxially arranged with clearance within the motor shaft 10.

A flow channel 22 for communicating the outside with an annular clearance 200 between the output shaft 20 and the motor shaft 10 is provided in the output shaft 20.

A pair of seals 30 are provided in the annular clearance 200 at positions corresponding to the bearings 11, and a pair of through holes 12 directed to the bearings 11 are provided at portions of the motor shaft 10 close to the seals 30.

In the coaxial electric drive device of the present invention, the pair of seals 30 provided at two ends of the annular clearance 200 avoids leakage of a lubricating and cooling medium to ensure the lubricating and cooling effect. As shown with reference to arrow R1, the lubricating and cooling medium enters the annular clearance 200 from the flow channel 22 provided in the output shaft 20 to lubricate and cool the motor shaft 10. As shown with reference to arrows R2, the lubricating and cooling medium can also flow to the pair of bearings 11 through the through holes 12 of the motor shaft 10 that are provided corresponding to the bearings 11 and directed to the bearings 11, to lubricate and cool the bearings 11. Therefore, in the context where the lubrication and cooling of the motor shaft 10 and the bearings 11 become more important as the rotation speed of the motor increases, effective lubrication and cooling of components such as the motor shaft 10 and the bearings 11 of the coaxial electric drive device can be achieved by means of the coaxial electric drive device of the present invention.

In some embodiments, the seals 30 are fixedly connected to the motor shaft 10, specifically by fixed connection such as interference fit or fasteners. In addition, when the rotation speed of the motor shaft 10 is not greater than a critical rotation speed, the seals 30 are in a slight interference fit with the output shaft 20. When the rotation speed of the motor shaft 10 is greater than the critical rotation speed, the seals 30 are in a clearance fit with the output shaft 20.

The slight interference fit refers to an interference fit with a small magnitude of interference.

In an operating condition where the motor shaft 10 does not rotate or rotates at a low speed, the seals 30 are in a slight interference fit with the output shaft 20 to implement the sealing to prevent leakage of the lubricating and cooling medium. In an operating condition where the motor shaft 10 rotates at a high speed, the friction between the seals 30 and the output shaft 20 will directly affect the rotation speed and temperature rise of the output shaft 20, and even lead to damage to the strength and life of the output shaft 20. In the present invention, in the operating condition where the motor shaft 10 rotates at a high speed, due to the effect of centrifugal force, the clearance fit between the seals 30 and the output shaft 20 can effectively reduce the friction loss.

In some embodiments, the critical rotation speed ranges from 15000 rpm to 20000 rpm. The critical rotation speed is used to differentiate between high-speed and low-speed operating conditions of the coaxial electric drive device, specifically the motor connected to the motor shaft 10, and its specific value is set according to the system requirements of the coaxial electric drive device.

In some embodiments, a range of magnitude of interference of the slight interference fit between the seals 30 and the output shaft 20 is determined according to the critical rotation speed. The range of magnitude of slight interference fit is determined according to the critical rotation speed, ensuring that the seals 30 are in a slight interference fit with the output shaft 20 in the low-speed operating condition to implement the sealing, and that the seals 30 are in a clearance fit with the output shaft 20 in the high-speed operating condition to reduce the frictional loss.

For example, according to the system requirements of the coaxial electric drive device, the critical rotation speed is set to be 15000 rpm. In this case, the magnitude of slight interference between the seals 30 and the output shaft 20 (e.g., 0.05 mm) may be determined by practical tests, theoretical calculations, and the like, ensuring that the seals 30 are in a slight interference fit with the output shaft 20 when the rotation speed of the motor shaft 10 is less than 15000 rpm, and that the seals 30 are in a clearance fit with the output shaft 20 to reduce the frictional loss as the rotation speed of the motor shaft 10 exceeds 15000 rpm.

As another example, in another implementation scenario, according to the system requirements of the coaxial electric drive device, the critical rotation speed is set to be 20000 rpm. In this case, the magnitude of slight interference between the seals 30 and the output shaft 20 may be determined as 0.10 mm by practical tests, theoretical calculations, and the like, such that the seals 30 are in a slight interference fit with the output shaft 20 when the rotation speed of the motor shaft 10 is less than 20000 rpm, and the seals 30 are in a clearance fit with the output shaft 20 to reduce the frictional loss as the rotation speed of the motor shaft 10 speed exceeds 20000 rpm.

Of course, the present invention is not limited to this. In different implementation scenarios, different critical rotation speeds may be set according to the system requirements of the coaxial electric drive device. According to the different critical rotation speeds, the seals 30 and the output shaft 20 may have different magnitudes of slight interference during initial configuration. Solutions that can implement the slight interference fit between the seals 30 and the output shaft 20 for implementing the sealing in the low-speed operating condition and the clearance fit between the seals 30 and the output shaft 20 for reducing the friction loss in the high-speed operating condition all fall within the scope of protection of the present invention.

In some embodiments, a pair of rolling bearings with a seal ring is provided in the annular clearance 200 at positions corresponding to the bearings 11. The seal rings of the rolling bearings form the seals 30, and the seal rings are arranged close to the through holes 12 and are in a slight interference fit with the output shaft 20.

By means of the rolling bearings with a seal ring, in the operating condition where the motor shaft 10 does not rotate or rotates at a low speed, the sealing between the motor shaft 10 and the output shaft 20 is achieved through the seal rings to avoid leakage of the lubricating and cooling medium. In the operating condition where the motor shaft 10 rotates at a high speed, the seal rings are in a clearance fit with the output shaft 20. In this case, the rolling bearings only have rolling friction with small friction loss, and therefore there is no significant limitation on the movement speed of the motor shaft 10, which can ensure the smooth operation of the motor shaft 10 while improving the drive efficiency of the electric vehicle.

It should be noted here that, regardless of the rotation speed, rollers of the rolling bearings are always in contact with the output shaft 20, and the seal rings of the rolling bearings will be in a slight interference fit or a clearance fit with the output shaft 20 depending on the rotation speed. In addition, in the operating condition where the motor shaft 10 rotates at a high speed, although there is a small clearance between the seal rings and the output shaft 20 due to the effect of centrifugal force, the rollers themselves in high-speed rotation can block the passage of the lubricating and cooling medium, and accordingly can avoid the leakage of the lubricating and cooling medium.

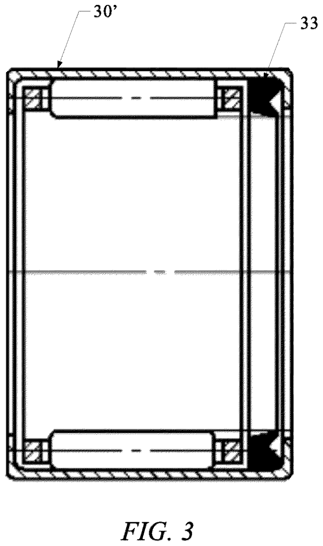

FIG. 3 shows a structure of an open type drawn cup needle roller bearing without an inner ring and having a seal ring on one side. With reference to FIGS. 1 to 3, the rolling bearings with a seal ring in this embodiment of the present invention each may specifically adopt an open type drawn cup needle roller bearing 30' without an inner ring and having a seal ring 33 on one side, which belongs to standard bearings and conforms to the Chinese national standard GB/T 290-2017.

Of course, the seals 30 may also adopt other forms of rolling bearings with a seal ring, as long as it is possible to realize that the seals 30 are in a slight interference fit with the output shaft 20 in the operating condition where the motor shaft 10 does not rotate or rotates at a low speed to avoid the leakage of the lubricating and cooling medium, and that the seals 30 are in a clearance fit with the output shaft 20 in the operating condition where the motor shaft 10 rotates at a high speed to avoid restricting the motor shaft 10, and the rolling friction with small friction loss can ensure smooth operation of the motor shaft 10 and improve the drive efficiency of the electric vehicle.

In some embodiments, the seals 30 may also adopt any one of sliding bearings, oil seals, rectangular rings and O-rings.

The sliding bearings, oil seals, rectangular rings or O-rings can also be in a slight interference fit with the output shaft 20 in the operating condition where the motor shaft 10 does not rotate or rotates at a low speed to avoid the leakage of the lubricating and cooling medium. However, in the operating condition where the motor shaft 10 rotates at a high speed, there may be large sliding friction between the sliding bearings, oil seals, rectangular rings or O-rings and the output shaft 20, which may cause some power loss. The use of the rolling bearings enables the minimization of power loss in the high-speed operating condition.

In addition, if the rectangular rings or the O-rings are used, corresponding grooves need to be cut on an outer wall of the output shaft 20 or on an inner wall of the motor shaft 10 to accommodate the rectangular rings or the O-rings, which may have a certain impact on the rigidity of the output shaft 20 and the motor shaft 10. The use of the rolling bearings is equivalent to adding two support points at two ends of the output shaft 20 and two ends of the motor shaft 10, so that the rigidity of the output shaft 20 and the motor shaft 10 can be enhanced.

The specific type of seals 30 to be used depends on the structure of the coaxial electric drive device, especially on a fit structure between the output shaft 20 and the motor shaft 10, and falls within the scope of protection of the present invention as long as it is possible to realize that when the rotation speed of the motor shaft 10 is not greater than the critical rotation speed, the seals 30 are in a slight interference fit with the output shaft 20, and that when the rotation speed of the motor shaft 10 is greater than the critical rotation speed, the seals 30 are in a clearance fit with the output shaft 20.

In some embodiments, a main body of the flow channel 22 provided in the output shaft 20 extends axially, and a portion of the flow channel 22 that leads to the annular clearance 200 extends radially, so that the output shaft 20 can maintain a stable structure to avoid affecting its operation. In addition, an opening of the flow channel 22 is provided in an end face or a circumferential wall of the output shaft 20, and the lubricating and cooling medium may enter the flow channel 22 from the end face or the circumferential wall of the output shaft 20.

In some embodiments, the through holes 12 provided in the motor shaft 10 each extend obliquely at a preset angle with respect to a radial direction. The setting of the preset angle needs to ensure that the through holes 12 are directed to the bearings 11, and also that the lubricating and cooling medium in the annular clearance 200 flows smoothly to the bearings 11 through the through holes 12.

In some embodiments, a radial hole 13, which leads to a motor rotor fixedly connected to the motor shaft 10, is provided in a portion of the motor shaft 10 that is located between the pair of through holes 12. The components such as the motor rotor of the coaxial electric drive device are lubricated and cooled by means of the radial hole.

In some embodiments, the motor shaft 10 has a non-circular cross section, and an outer wall of the motor shaft 10 includes an arc-shaped portion in an interference fit with the motor rotor, and a non-arc-shaped portion forming a clearance with the motor rotor. By means of the arc-shaped portion, the motor shaft 10 can be securely connected to the motor rotor; and by means of the non-arc-shaped portion, such as a square, concave, specially-shaped portion, a clearance is formed between the motor shaft 10 and the motor rotor for allowing the lubricating and cooling medium to flow.

In the above various embodiments, the flow channel 22 allows for the inflow of the lubricating and cooling medium, and the lubricating and cooling medium is specifically an oil medium or a water medium. The oil medium may come from an oil pump, or may be collected from other components that splash lubricating oil, and a motor that uses the oil medium for lubrication and cooling is an oil-cooled motor. The water medium may come from a water pump, and a motor that uses the water medium for lubrication and cooling is a water-cooled motor. In this way, the coaxial electric drive device of the present invention may use an oil-cooled motor or a water-cooled motor according to requirements.

In addition, the speed reducer in the coaxial electric drive device of the present invention may preferably be an integrated differential.

In summary, in the coaxial electric drive device of the present invention, the pair of seals 30 provided at two ends of the annular clearance 200 avoids the leakage of the lubricating and cooling medium to ensure the lubricating and cooling effect. The lubricating and cooling medium enters the annular clearance 200 from the flow channel 22 provided in the output shaft 20 to lubricate and cool the motor shaft 10. The lubricating and cooling medium can also flow to the pair of bearings 11 through the through holes 12 of the motor shaft 10 that are provided corresponding to the bearings 11 and directed to the bearings 11, to lubricate and cool the bearings 11. In addition, the lubricating and cooling medium can also flow to the motor rotor through the radial hole 13 of the motor shaft 10 to lubricate and cool the motor rotor. Therefore, in the context where the lubrication and cooling of the components such as the motor shaft 10, the bearings 11 and the motor rotor become more important as the rotation speed of the motor increases, effective lubrication and cooling of the components such as the motor shaft 10, the bearings 11 and the electronic rotor in the coaxial electric drive device can be achieved by means of the coaxial electric drive device of the present invention.

The above is a further detailed description of the present invention with reference to the specific preferred implementations, and it cannot be considered that the specific implementation of the present invention is limited to these descriptions. For those of ordinary skill in the art of the present invention, several simple deductions or substitutions can be further made without departing from the concept of the present invention, and should be regarded as falling within the scope of protection of the present invention.

## Claims

1. A coaxial electric drive device, comprising a hollow motor shaft and a speed reducer drivingly connected to the motor shaft, two ends of the motor shaft being rotatably supported by a pair of bearings, and an output shaft of the speed reducer being coaxially arranged with clearance within the motor shaft,
**characterized in that** a flow channel for communicating the outside with an annular clearance between the output shaft and the motor shaft is provided in the output shaft;
a pair of seals are provided in the annular clearance at positions corresponding to the bearings, and a pair of through holes directed to the bearings are provided at portions of the motor shaft close to the seals.

2. The coaxial electric drive device according to claim 1, **characterized in that** the seals are fixedly connected to the motor shaft;
when a rotation speed of the motor shaft is not greater than a critical rotation speed, the seals are in a slight interference fit with the output shaft; and
when the rotation speed of the motor shaft is greater than the critical rotation speed, the seals are in a clearance fit with the output shaft.

3. The coaxial electric drive device according to claim 2, **characterized in that** the critical rotation speed ranges from 15000 rpm to 20000 rpm.

4. The coaxial electric drive device according to claim 2, **characterized in that** a range of magnitude of interference of the slight interference fit is determined according to the critical rotation speed.

5. The coaxial electric drive device according to claim 1, **characterized in that** a pair of rolling bearings with a seal ring are provided in the annular clearance at positions corresponding to the bearings, the seal rings form the seals, and the seal rings are disposed close to the through holes.

6. The coaxial electric drive device according to claim 1, **characterized in that** the seals are any one of sliding bearings, oil seals, rectangular rings and O-rings.

7. The coaxial electric drive device according to claim 1, **characterized in that** a main body of the flow channel extends axially and has an opening provided in an end face or a circumferential wall of the output shaft, and
a portion of the flow channel that leads to the annular clearance extends radially.

8. The coaxial electric drive device according to claim 1, **characterized in that** the through holes each extend obliquely at a preset angle with respect to a radial direction.

9. The coaxial electric drive device according to claim 1, **characterized in that** a radial hole, which leads to a motor rotor fixedly connected to the motor shaft, is provided in a portion of the motor shaft that is located between the pair of through holes.

10. The coaxial electric drive device according to claim 9, **characterized in that** the motor shaft has a non-circular cross-section, and
an outer wall of the motor shaft comprises an arc-shaped portion in an interference fit with the motor rotor, and a non-arc-shaped portion forming a clearance with the motor rotor.

11. The coaxial electric drive device according to any one of claims 1-10, **characterized in that** the flow channel allows for the inflow of a lubricating and cooling medium, and
the lubricating and cooling medium is an oil medium or a water medium.
